# EUROPÄISCHE PATENTSCHRIFT

(11) **EP 0 423 551 B1**
(45) Veröffentlichungstag und Bekanntmachung des Hinweises auf die Patenterteilung: **21.12.1994**
(21) Anmeldenummer: 90119034.8
(22) Anmeldetag: 04.10.1990
(51) Int. Cl.: B29C 61/06, H02G 15/18

(54) **Wärmeschrumpfbare Umhüllung mit einer Verstärkungseinlage**
Heat-shrinkable covering with reinforcing insert
Couverture thermorétractable avec un insert de renforcement

(30) Priorität: 20.10.1989 DE 3935044
(43) Veröffentlichungstag der Anmeldung: 24.04.1991
(73) Patentinhaber: RXS Schrumpftechnik-Garnituren GmbH, D-58093 Hagen (DE)
(72) Erfinder: Brudermann, Uwe, Dr., W-2305 Heikendorf (DE); Heier, Manfred, W-5804 Herdecke (DE); Kipfelsberger, Christian, Dr., W-8071 Hepberg (DE)
(74) Vertreter: Fuchs, Franz-Josef, Dr.-Ing.

(56) Entgegenhaltungen:
- EP-A- 0 120 475
- EP-A- 0 385 141
- DE-A- 3 319 120
- GB-A- 2 173 052
- US-A- 4 016 356
- US-A- 4 559 973

## Beschreibung

Bei der Erfindung handelt es sich um eine wärmeschrumpfbare Umhüllung mit einer gewellten Verstärkungseinlage.

Es sind wärmeschrumpfbare Umhüllungen bekannt, die zur Verbesserung der mechanischen Eigenschaften schrumpfbare und nicht schrumpfbare Komponenten enthalten. Dort werden als Einlage in erster Linie Fäden, Gewebe oder Gewirke eingesetzt, wie es beispielsweise in der europäischen Patentanmeldung 0 117 026 gezeigt ist. Die Herstellung der genannten Umhüllungen mit derartigen Einlagen gestaltet sich zumeist sehr aufwendig. Dazu kommt noch, daß bei diesen bekannten Umhüllungen, insbesondere im Nachrichtenkabelbereich, zur Verminderung der Permeation eine Aluminiumfolie kaschiert werden muß, was zusätzliche Arbeitsschritte in der Fertigung erfordert.

Aus der europäischen Patentanmeldung 0 120 475 ist eine gewellte Kabelmuffeneinlage bekannt, die als selbständiges Bauteil schützend um eine Spleißstelle herumgewickelt wird. Hierüber wird dann eine Schrumpfmuffe aufgeschrumpft. Die Kabelmuffeneinlage wirkt hierbei als Stützelement und verändert ihre Form durch Einwirkung der Schrumpfmuffe nicht.

In der US-Patentschrift 4.016.356 werden Folien mit Wellungen in eine Schrumpfumhüllung eingeführt, wobei die Wellungen senkrecht zueinander verlaufen. Die Wellungen im Mittelteil dienen nur der Verstärkung, während die Wellungen in den Endbereichen eine konusförmige Anpassung der Schrumpfumhüllung zulassen.

Für die vorliegende Erfindung ergibt sich nun die Aufgabe, eine wärmeschrumpfbare Umhüllung zu schaffen, deren mechanische Eigenschaften gegenüber bestehenden Gebilden erhöht sind, deren Wirksamkeit gegen Permeation verbessert ist und deren Herstellung sich einfach gestaltet.

Die gestellte Aufgabe wird mit einer wärmeschrumpfbaren Umhüllung der eingangs erläuterten Art dadurch gelöst, daß die Verstärkungseinlage zwischen schrumpfbaren polymeren Deckschichten in Wellenform quer zur Dehn- bzw. Schrumpfrichtung verlaufend eingebettet ist und daß die Verstärkungseinlage mit den Deckschichten in den Berührungsstellen fest verbunden ist.

Die Ausbildung der vorzugsweise metallischen Verstärkungseinlage soll gemäß der Erfindung so gewählt sein, daß sie bei dem für das Schrumpfen nötigen Dehnen der schrumpfbaren Deckschichten nicht verletzt wird. Gleichermaßen gilt dies dann auch für das spätere Schrumpfen. Hierzu eignet sich besonders die Ausbildung der Verstärkungseinlage in gewellter Form, wobei die Wellung quer zur Dehn- bzw. Schrumpfrichtung liegen muß. Weiterhin ist es möglich, die Verstärkungseinlage mit Einstichen, Einschnitten, Löchern oder/und Sicken zu versehen, um sie den jeweiligen Anforderungen bezüglich Festigkeit einerseits und Beweglichkeit andererseits optimal anpassen zu können.

Außerdem kann die Verstärkungseinlage zur weiteren Verbesserung der Ein- und Weiterreißfestigkeit mit einer thermoplastischen Folie ein- bzw. zweiseitig beschichtet werden. Als Materialien können insbesondere Polyethylenterephthalat- (PETP) und Ethylen-Vinylacetat-Copolymer- (EVA) Beschichtungen vorgesehen werden.

Als Materialien für die Verstärkungseinlage sollten vorzugsweise Aluminium bzw. Aluminiumlegierungen verwendet werden, obgleich auch vor allem jene Metalle in Betracht kommen, die geringe Permeationsraten aufweisen. Weiterhin können auch schrumpfbare Kunststoffkomponenten verwendet werden, so daß hierdurch der Anwendungsbereich zusätzlich erweitert werden kann.

Die Dicke der Verstärkungseinlage sollte im Hinblick auf die Permeationseigenschaften und vor allem zum Zwecke der Erhöhung der Ein- und Weiterreißfestigkeit, als auch der Erhöhung der Berst-, Quer- und Durchstoßfestigkeit zwischen 0,01 mm und 1 mm, vorzugsweise aber zwischen 0,05 mm und 0,2 mm liegen.

Das Einbetten einer metallischen Folie zwischen wärmeschrumpffähigen Deckschichten bringt fertigunstechnische und anwendungstechnische Vorteile. Fertigungstechnisch kann bei einer wärmeschrumpfbaren Umhüllung mit einer solchen Verstärkungseinlage auf die nachträgliche Kaschierung mit einer entsprechenden metallischen Folie verzichtet werden. Weiterhin erlaubt eine als gewellte metallische Folie ausgebildete Verstärkungseinlage infolge ihrer Steifheit im Vergleich zu den bisher verwendeten Fäden, Geweben, Gewirken und dergleichen eine sicherere und problemlosere Handhabung im Fertigungsprozeß.

Die Kaschierung einer solchen Folie kann zudem im Hinblick auf die gestellten Anforderungen gezielt durchgeführt werden. So ist zum Beispiel möglich, diese gewellte Folie einseitig oder beidseitig mit einer polymeren Matrix zu beschichten. Die Anbindung kann dabei je nach geometrischer Form der metallischen Folie linienförmig oder partiell flächig erfolgen. Auch diese Formen können bei schrumpfbaren Kunststoff-Verstärkungseinlagen angewendet werden.

Die Verbindung kann dabei sowohl durch das Aufschmelzen der auf der metallischen Folie befindlichen polymeren Schicht oder durch entsprechende Haftvermittler, Schmelzkleber und dergleichen erfolgen. Auch ist es denkbar, daß die gewellte Verstärkungseinlage in einem ersten Beschichtungsschritt in eine polymere Matrix aus zum Beispiel Low-Density-Polyethylen (LDPE) und dergleichen eingebettet wird und in einem zweiten Beschichtungsschritt dann mit der noch zu reckenden Deckschicht versehen wird. Ebenso ist es auch möglich, daß die gewellte metallische Verstärkungseinlage in die zu reckende polymere Matrix zum Beispiel aus High-Density-Polyethylen (HDPE) in einem einzigen Beschichtungsschritt eingebettet wird. Als Materialien kommen alle bisher gebräuchlichen Schrumpfcompounds infrage, die ganz allgemein jede Art von vernetzbaren kristallinen Thermoplasten umfassen. Geeignet sind hierfür insbesondere hochmolekulare Polyethylene, Polypropylen, Polybuten etc.

Ein weiterer Vorteil ergibt sich durch die eingebrachte metallische Folie bei der Strahlenvernetzung. Infolge auftretender Streustrahlen läßt sich ein sehr gleichmäßiger Vernetzungsgrad erreichen. Dieser läßt sich zudem im Verbund durch die gewählte Geometrie der metallischen Einlage örtlich gezielt beeinflussen.

Es ist ferner möglich, durch eine gezielte Wellung der metallischen Folie, Reckfaktoren von bis zu 10 und größer zu erreichen. Durch die Reckung der Deckschichten in Wellrichtung der metallischen Folie entsteht nach dem Reckprozeß ein flächiger Verbund, dessen Verbindung dadurch noch erhöht werden kann, daß der Verbund beim anschließenden Durchlauf durch ein Walzenpaar noch zusätzlich verpreßt wird.

Die anwendungstechnischen Vorteile liegen u.a. darin, daß bei der üblichen Beflammung der wärmeschrumpfbaren Umhüllung die eingebettete metallische Folie sehr wesentlich zu einer schnelleren und gleichmäßigeren Wärmeleitung und -verteilung beim Schrumpfprozeß beiträgt.

Die Erfindung wird nun anhand von neun Figuren näher erläutert.
- Figur 1: zeigt einen Aufbau der erfindungsgemäßen Umhüllung.
- Figur 2: zeigt ein Beispiel für die Verbindung der Verstärkungseinlage mit der wärmeschrumpfbaren Deckschicht.
- Figur 3: verdeutlicht den eventuell gewünschten Glättungsvorgang im Herstellverfahren mit einem Schnittbildausschnitt von der Umhüllung.
- Figur 4: zeigt eine Verstärkungeinlage mit dreieckförmiger Wellung.
- Figur 5: zeigt eine Verstärkungseinlage mit abgerundeter Wellung.
- Figur 6: zeigt eine Verstärkungseinlage in dreieckförmiger Mäanderanordnung.
- Figur 7: zeigt eine Verstärkungseinlage mit gegenseitig sich überdeckender Mäanderanordnung.
- Figur 8: zeigt eine Verstärkungseinlage mit zusätzlichen Versteifungsmaßnahmen.
- Figur 9: zeigt nochmals eine gewellte Verstärkungseinlage als Mehrschichtverbund (Sandwich) aufgebaut in einem Schnittbildausschnitt.

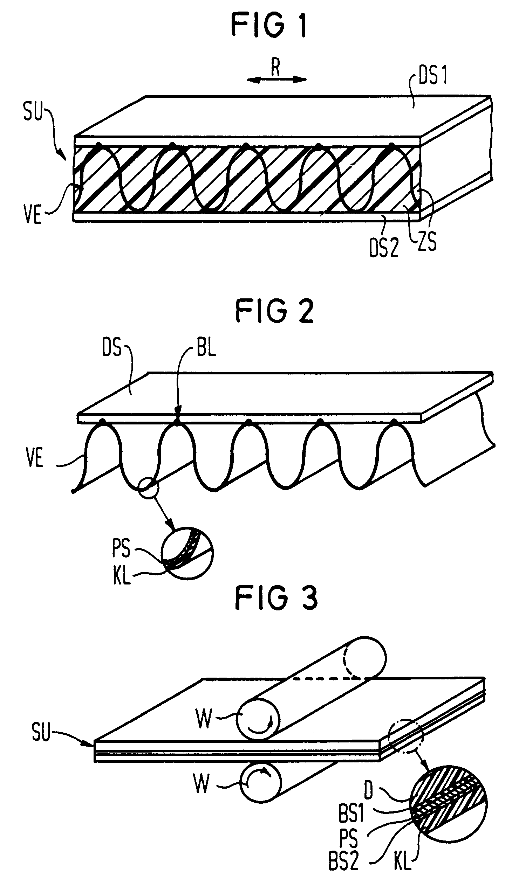

Die Figur 1 verdeutlicht im Querschnitt die Anordnung der einzelnen Schichtelemente der wärmeschrumpfbaren Umhüllung SU. Hier ist zu erkennen, daß die gewellte Verstärkungseinlage VE zwischen zwei schrumpfbaren Deckschichten DS1 und DS2 angeordnet ist. Die Zwischenräume sind mit einer Zwischenschicht ZS aus einem Material ausgefüllt, das während des Dehnungs- bzw. Schrumpfvorganges zuläßt, daß die Form der Verstärkungseinlage VE entweder gestreckt oder zusammengeschoben wird. Hierzu eignet sich beispielsweise Low-Density-Polyethylen (LDPE), während die schrumpfbaren Deckschichten DS1 und DS2 aus High-Density-Polyethylen (HDPE) bestehen. In den Berührungsstellen zwischen der Verstärkungseinlage VE und den Deckschichten DS1 und DS2 erfolgt eine feste Verbindung.

Figur 2 zeigt, daß die Verstärkungseinlage VE entlang ihrer "Maxima- und Minima-Wellung" mit der jeweiligen Deckschicht zumindest partiell verbunden wird, zum Beispiel durch Ansiegeln bzw. Anschmelzen mit Polyethylen (PE) oder Ethylen-Vinylacetat-Gopolymer (EVA). Im Teilausschnittsbild ist angezeigt, daß die Verstärkungseinlage VE beispielsweise aus einer Permeationssperre (zum Beispiel Aluminium) mit einer Schmelzkleberbeschichtung KL bestehen kann.

Figur 3 erläutert, daß die erfindungsgemäß als Verbundfolie hergestellte Umhüllung SU nach dem Reckvorgang, der für die Schrumpffähigkeit erforderlich ist, gewalzt werden kann, zum Beispiel mit Hilfe von Walzen W, um eine relativ glatte und gleichmäßige Oberfläche und einen noch festeren Verbund zu erhalten. Im Schnittbildausschnitt ist die Schichtfolge aus der Deckschicht D (HDPE), den Beschichtungen BS1 und BS2 auf der Permeationsschicht PS und einer Kleberschicht KL ersichtlich.

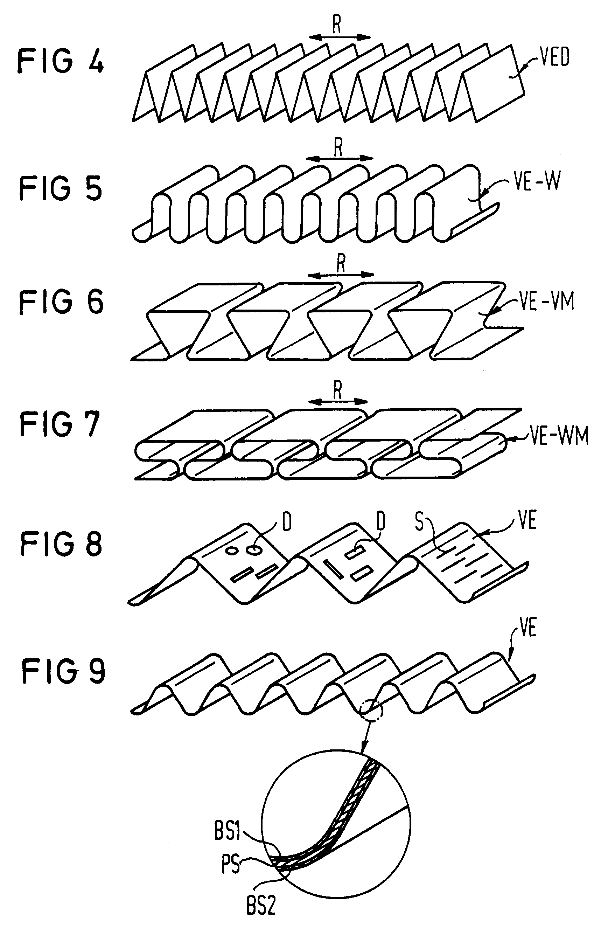

Figur 4 verdeutlicht die Anordnungsmöglichkeit der nicht schrumpfbaren Verstärkungseinlage VE-D in gefalteter Dreiecksform, wobei der Doppelpfeil R hier wie in den folgenden Figuren die Richtungen andeutet, in welchen bei einer Dehnung (Reckvorgang) bzw. einem Zusammenschieben (Schrumpfvorgang) eine zerstörungsfreie Bewegung der Verstärkungseinlage stattfinden kann.

Figur 5 zeigt bei etwa gleichen Verhältnissen eine abgerundete Wellenform der Verstärkungseinlage VE-W.

Figur 6 zeigt eine etwa dreieckförmige Mäanderanordnung der Verstärkungseinlage VE-VM. Durch die teilweise gegenseitige Überdeckung ist hier ein besonders großer Dehn- bzw. Schrumpffaktor möglich.

Figur 7 zeigt eine Anordnung, die nahezu der aus Figur 6 entspricht, doch ist hier wieder eine abgerundete Wellenform für die Verstärkungseinlage VE-WM gewählt.

Figur 8 zeigt, daß in die Grundform der Verstärkungseinlage VE zusätzlich Schlitze S oder Durchbrüche D verschiedener Gestaltung eingebracht sind. Hierdurch ergeben sich aufgrund von Kantenbildungen und Durchgriff des Füllmaterials zusätzliche "Eigenverstärkungen".

Die Figur 9 zeigt nochmals eine Wellanordnung einer Verstärkungseinlage VE mit einem Ausschnittsbild, aus dem eine weitere Schichtenfolge zu erkennen ist. Hier besteht zum Beispiel die Verstärkungseinlage VE aus einer Permeationsschicht PS (zum Beispiel Aluminium), die beidseitig Beschichtungen BS1 und BS2 aus Polyethylen (PE), Polyethylenterephthalat (PETP) oder Ethylen-Vinylacetat-Copolymer (EVA) aufweist.

Die einzelnen Möglichkeiten bezüglich Anordnung und Aufbau der Verstärkunseinlage sowie deren Einlagerung in eine bzw. mehrere schrumpfbare Komponenten lassen sich miteinander kombinieren. Bei einem mehrschichtigen Aufbau ist von Vorteil, wenn die Verstärkungseinlage mit Einstichen, Ausschnitten, Öffnungen oder Sicken versehen ist, da dadurch die äußeren Schichten gewissermaßen im Durchgriff miteinander verbunden sind und somit eine wesentlich bessere Haftung zwischen den einzelnen Schichten erreicht ist.

## Patentansprüche

1. Wärmeschrumpfbare Umhüllung (SU) mit einer gewellten Verstärkungseinlage (VE),
**dadurch gekennzeichnet,**
daß die Verstärkungseinlage (VE) zwischen schrumpfbaren polymeren Deckschichten (DS) in Wellenform quer zur Dehn- bzw. Schrumpfungsrichtung (R) verlaufend eingebettet ist und daß die Verstärkungseinlage (VE) mit den Deckschichten (DS) in den Berührungsstellen fest verbunden ist.

2. Wärmeschrumpfbare Umhüllung nach Anspruch 1, **dadurch gekennzeichnet,** daß die Verstärkungseinlage (VE) in Wellenform eingebracht ist.

3. Wärmeschrumpfbare Umhüllung nach Anspruch 2, **dadurch gekennzeichnet,** daß die Wellenform der Verstärkungseinlage (VED) vorzugsweise dreiecksartig ist.

4. Wärmeschrumpfbare Umhüllung nach Anspruch 2, **dadurch gekennzeichnet,** daß die Wellenform der Verstärkungseinlage (VE-W) abgerundet ist.

5. Wärmeschrumpfbare Umhüllung nach Anspruch 2, **dadurch gekennzeichnet,** daß die Wellenform der Verstärkungseinlage (VE-VM) mäanderartig in überdeckender Dreiecksform ausgebildet ist.

6. Wärmeschrumpfbare Umhüllung nach Anspruch 2, **dadurch gekennzeichnet,** daß die Wellenform der Verstärkungseinlage (VE-WM) mäanderartig in überdeckender Rundform ausgebildet ist.

7. Wärmeschrumpfbare Umhüllung nach einem der vorhergehenden Ansprüche, **dadurch gekennzeichnet,** daß die Verstärkungseinlage (Schlitze S) oder Durchbrüche (D) aufweist.

8. Wärmeschrumpfbare Umhüllung nach einem der Ansprüche 1 bis 6, **dadurch gekennzeichnet,** daß die Verstärkungseinlage (VE) Prägungen aufweist.

9. Wärmeschrumpfbare Umhüllung nach einem der vorhergehenden Ansprüche, **dadurch gekennzeichnet,** daß die Verstärkungseinlage (VE) aus permeationsverhinderndem Material, vorzugsweise aus einem Metall wie Aluminium, besteht.

10. Wärmeschrumpfbare Umhüllung nach Anspruch 9, **dadurch gekennzeichnet,** daß die Verstärkungseinlage (VE) zumindest eine einseitige Beschichtung, vorzugsweise aus thermoplastischem Kunststoff wie Ethylen-Vinylacetat-Copolymer (EVA) oder Polyethylenterephthalat (PETP) aufweist.

11. Wärmeschrumpfbare Umhüllung nach einem der vorhergehenden Ansprüche, **dadurch gekennzeichnet,** daß die Dicke der Verstärkungseinlage (VE) zwischen 0,01 mm und 1 mm, vorzugsweise zwischen 0,05 und 0,2 mm beträgt.

12. Wärmeschrumpfbare Umhüllung nach einem der vorhergehenden Ansprüche, **dadurch gekennzeichnet,** daß die Verstärkungseinlage (VE) durch Aufschmelzung der auf ihr befindlichen polymeren Beschichtung mit der schrumpfbaren Deckschicht (DS) in partiellen Bereichen verbunden ist.

13. Wärmeschrumpfbare Umhüllung nach einem der Ansprüche 1 bis 11, **dadurch gekennzeichnet,** daß die Verstärkungseinlage (VE) mittels Haftvermittler, insbesondere mittels an sich bekannter Schmelzkleber, mit der schrumpfbaren Deckschicht (DS) verbunden ist.

14. Wärmeschrumpfbare Umhüllung nach einem der Ansprüche 1 bis 11, **dadurch gekennzeichnet,** daß die Verstärkungseinlage (VE) in einer polymeren Matrix (ZS), vorzugsweise aus Low-Density-Polyethylen, eingebettet ist und daß diese polymere Matrix (ZS) mit der Deckschicht (DS) haftend verbunden ist.

15. Wärmeschrumpfbare Umhüllung nach einem der Ansprüche 1 bis 11, **dadurch gekennzeichnet,** daß die Verstärkungseinlagen (VS) in der zu reckenden Deckschicht (DS) eingebettet sind.

16. Wärmeschrumpfbare Umhüllung nach einem der vorhergehenden Ansprüche, **dadurch gekennzeichnet,** daß die schrumpfbare Deckschicht (DS) aus an sich bekannten Schrumpfcompounds aus vernetzbaren kristallinen Thermoplasten, vorzugsweise aus hoch molekularem Polyethylen, Polypropylen, Polybuten oder einem ähnlichen Kunststoff besteht.

17. Wärmeschrumpfbare Umhüllung nach einem der vorhergehenden Ansprüche, **dadurch gekennzeichnet,** daß die Geometrie der Verstärkungseinlage (VE) im Schichtenverbund zur Beeinflussung des Vernetzungsgrades gezielt wählbar ist.

18. Wärmeschrumpfbare Umhüllung nach einem der vorhergehenden Ansprüche, **dadurch gekennzeichnet,** daß der Reckfaktor bis zu 10 und größer beträgt.

19. Wärmeschrumpfbare Umhüllung nach einem der vorhergehenden Ansprüche, **dadurch gekennzeichnet,** daß der Schichtenverbund nach dem Reckprozeß durch flächenhafte Druckeinwirkung gegelättet und zusätzlich verbessert ist.

20. Wärmeschrumpfbare Umhüllung nach einem der vorhergehenden Ansprüche, **dadurch gekennzeichnet,** daß die Verstärkungseinlage (VE) gute Wärmeleitfähigkeit aufweist, wie zum Beispiel Metalle.

21. Wärmeschrumpfbare Umhüllung nach einem der vorhergehenden Ansprüche, **dadurch gekennzeichnet,** daß die Verstärkungseinlage als Mehrschichtfolie aufgebaut ist.

22. Wärmeschrumpfbare Umhüllung nach Anspruch 21, da**durch gekennzeichnet,** daß bei der Mehrschichtfolie die äußeren Schichten mit Schlitzen, Löchern, Sicken und dergleichen versehen sind.

23. Wärmeschrumpfbare Umhüllung nach einem der vorhergehenden Ansprüche, **dadurch gekennzeichnet,** daß die Verstärkungseinlage (VE) aus schrumpfbarem Kunststoffmaterial besteht.

## Claims

1. Heat-shrinkable covering (SU) with a corrugated reinforcing insert (VE), characterized in that the reinforcing insert (VE) is embedded between shrinkable polymeric outer layers (DS) running in corrugated form transversely with respect to the direction of expansion or shrinkage (R) and in that the reinforcing insert (VE) is firmly joined to the outer layers (DS) at the points of contact.

2. Heat-shrinkable covering according to Claim 1, characterized in that the reinforcing insert (VE) is incorporated in a corrugated form.

3. Heat-shrinkable covering according to Claim 2, characterized in that the corrugated form of the reinforcing insert (VED) is preferably triangular.

4. Heat-shrinkable covering according to Claim 2, characterized in that the corrugated form of the reinforcing insert (VE-W) is rounded-off.

5. Heat-shrinkable covering according to Claim 2, characterized in that the corrugated form of the reinforcing insert (VE-VM) is designed in a meandering manner in a covering triangular form.

6. Heat-shrinkable covering according to Claim 2, characterized in that the corrugated form of the reinforcing insert (VE-WM) is designed in a meandering manner in a covering round form.

7. Heat-shrinkable covering according to one of the preceding claims, characterized in that the reinforcing insert has slits (S) or clearances (D).

8. Heat-shrinkable covering according to one of Claims 1 to 6, characterized in that the reinforcing insert (VE) has embossings.

9. Heat-shrinkable covering according to one of the preceding claims, characterized in that the reinforcing insert (VE) consists of permeation-preventing material, preferably of a metal such as aluminium.

10. Heat-shrinkable covering according to Claim 9, characterized in that the reinforcing insert (VE) has at least one one-sided coating, preferably of thermoplastic material such as ethylene-vinyl acetate copolymer (EVA) or polyethyleneterephthalate (PETP).

11. Heat-shrinkable covering according to one of the preceding claims, characterized in that the thickness of the reinforcing insert (VE) is between 0.01 mm and 1 mm, preferably between 0.05 and 0.2 mm.

12. Heat-shrinkable covering according to one of the preceding claims, characterized in that the reinforcing insert (VE) is bonded in partial regions to the shrinkable outer layer (DS) by melting of the polymeric coating located on it.

13. Heat-shrinkable covering according to one of Claims 1 to 11, characterized in that the reinforcing insert (VE) is bonded to the shrinkable outer layer (DS) by means of adhesion promoters, preferably by means of hot-melt adhesives known per se.

14. Heat-shrinkable covering according to one of Claims 1 to 11, characterized in that the reinforcing insert (VE) is embedded in a polymeric matrix (ZS), preferably of low-density polyethylene, and in that this polymeric matrix (ZS) is bonded adhesively to the outer layer (DS).

15. Heat-shrinkable covering according to one of Claims 1 to 11, characterized in that the reinforcing inserts (VS) are embedded in the outer layer (DS) to be stretched.

16. Heat-shrinkable covering according to one of the preceding claims, characterized in that the shrinkable outer layer (DS) consists of shrinking compounds known per se comprising crosslinkable crystalline thermoplastics, preferably high-molecular-weight polyethylene, polypropylene, polybutene or a similar plastic.

17. Heat-shrinkable covering according to one of the preceding claims, characterized in that the geometry of the reinforcing insert (VE) in the laminated structure is specifically selectable for influencing the degree of crosslinkage.

18. Heat-shrinkable covering according to one of the preceding claims, characterized in that the stretching factor is up to 10 and above.

19. Heat-shrinkable covering according to one of the preceding claims, characterized in that the laminated structure is smoothed and additionally improved after the stretching process by the effect of pressure over its surface area.

20. Heat-shrinkable covering according to one of the preceding claims, characterized in that the reinforcing insert (VE) has good thermal conductivity, such as for example metals.

21. Heat-shrinkable covering according to one of the preceding claims, characterized in that the reinforcing insert is constructed as a multilayer film.

22. Heat-shrinkable covering according to Claim 21, characterized in that in the multilayer film the outer layers are provided with slits, holes, beads and the like.

23. Heat-shrinkable covering according to one of the preceding claims, characterized in that the reinforcing insert (VE) consists of shrinkable plastic material.

## Revendications

1. Enveloppe (SU) thermorétractable ayant un insert de renforcement (VE) ondulé,
caractérisée
en ce que l'insert de renforcement (VE) est inséré entre des couches de finition (DS) polymères rétractables en s'étendant sous forme ondulée transversalement à la direction (R) de dilatation ou de retrait et en ce que l'insert de renforcement (VE) est relié rigidement aux couches de finition (DS) aux points de contact.

2. Enveloppe thermorétractable suivant la revendication 1, caractérisée en ce que l'insert de renforcement (VE) est inséré sous forme ondulée.

3. Enveloppe thermorétractable suivant la revendication 2, caractérisée en ce que la forme ondulée de l'insert de renforcement (VED) est, de préférence, de type triangulaire.

4. Enveloppe thermorétractable suivant la revendication 2, caractérisée en ce que la forme ondulée de l'insert de renforcement (VE-W) est arrondie.

5. Enveloppe thermorétractable suivant la revendication 2, caractérisée en ce que la forme ondulée de l'insert de renforcement (VE-VM) est réalisée de manière sinueuse sous une forme triangulaire à recouvrement.

6. Enveloppe thermorétractable suivant la revendication 2, caractérisée en ce que la forme ondulée de l'insert de renforcement (VE-WM) est sinueuse sous une forme circulaire à recouvrement.

7. Enveloppe thermorétractable suivant l'une quelconque des revendications précédentes, caractérisée en ce que l'insert de renforcement comporte des fentes (S) ou des passages (D).

8. Enveloppe thermorétractable suivant l'une des revendications 1 à 6, caractérisée en ce que l'insert de renforcement (VE) comporte des empreintes.

9. Enveloppe thermorétractable suivant l'une quelconque des revendications précédentes, caractérisée en ce que l'insert de renforcement (VE) est en une matière empêchant la perméation, de préférence en un métal comme l'aluminium.

10. Enveloppe thermorétractable suivant la revendication 9, caractérisée en ce que l'insert de renforcement (VE) comporte au moins un revêtement sur une face, de préférence en matière plastique thermoplastique comme en copolymère d'éthylène et d'acétate de vinyle (EVA) ou en poly(téréphtalate d'éthylène) (PETP).

11. Enveloppe thermorétractable suivant l'une des revendications précédentes, caractérisée en ce que l'épaisseur de l'insert de renforcement (VE) est comprise entre 0,01 mm et 1 mm, de préférence entre 0,05 et 0,2 mm.

12. Enveloppe thermorétractable suivant l'une des revendications précédentes, caractérisée en ce que l'insert de renforcement (VE) est relié dans des zones partielles à la couche de finition (DS) rétractable par fusion du revêtement polymère qui s'y trouve.

13. Enveloppe thermorétractable suivant l'une quelconque des revendications 1 à 11, caractérisée en ce que l'insert de renforcement (VE) est relié au moyen d'un adhésif, notamment au moyen d'une colle fusible en sol connue, à la couche de finition (DS) rétractable.

14. Enveloppe thermorétractable suivant l'une quelconque des revendications 1 à 11, caractérisée en ce que l'insert de renforcement (VE) est incorporé à une matrice (ZS) polymère, de préférence à du polyéthylène basse densité, et cette matrice (ZS) polymère est reliée par collage à la couche de finition (DS).

15. Enveloppe thermorétractable suivant l'une quelconque des revendications 1 à 11, caractérisée en ce que les inserts de renforcement (VS) sont incorporés à la couche de finition à étirer.

16. Enveloppe thermorétractable suivant l'une quelconque des revendications précédentes, caractérisée en ce que la couche de finition (DS) rétractable est en une composition rétractable en soi connue, composée de matières thermoplastiques cristallines réticulables, de préférence de polyéthylène, de polypropylène, de polybutène ou d'une autre matière plastique à haut poids moléculaire.

17. Enveloppe thermorétractable suivant l'une quelconque des revendications précédentes, caractérisée en ce que la géométrie de l'insert de renforcement (VE) dans le stratifié peut être choisie comme il convient pour influencer le degré de réticulation.

18. Enveloppe thermorétractable suivant l'une quelconque des revendications précédentes, caractérisée en ce que le facteur d'étirage va jusqu'à 10 et davantage.

19. Enveloppe thermorétractable suivant l'une quelconque des revendications précédentes, caractérisée en ce que le stratifié est lissé et est encore amélioré après le processus d'étirage par action d'une pression appliquée sur la surface.

20. Enveloppe thermorétractable suivant l'une quelconque des revendications précédentes, caractérisée en ce que l'insert de renforcement (VE) a une bonne conductivité thermique en étant par exemple un métal.

21. Enveloppe thermorétractable suivant l'une quelconque des revendications précédentes, caractérisée en ce que l'insert de renforcement est constitué sous la forme d'une feuille stratifiée.

22. Enveloppe thermorétractable suivant la revendication 21, caractérisée en ce que, dans la feuille stratifiée, les couches extérieures sont munies de fentes, de trous, de moulures et analogues.

23. Enveloppe thermorétractable suivant l'une quelconque des revendications précédentes, caractérisée en ce que l'insert de renforcement (VE) est en une matière plastique rétractable.
